# EUROPEAN PATENT SPECIFICATION

(11) **EP 3 100 211 B1**
(45) Date of publication and mention of the grant of the patent: **26.09.2018**
(21) Application number: 15710014.0
(22) Date of filing: 26.01.2015
(51) Int. Cl.: G06M 1/10, A01C 7/10, A01C 7/08

(54) **DEVICE FOR MONITORING FEEDING OF GRANULES, FEEDING DEVICE FOR SUCH GRANULES AND METHOD OF INSTALLATION OF SUCH MONITORING DEVICE**
VORRICHTUNG ZUR ÜBERWACHUNG DES ZUFÜHRENS VON GRANULATEN, ZUFÜHRVORRICHTUNG FÜR DERARTIGE GRANULATE UND VERFAHREN ZUR INSTALLIERUNG EINER DERARTIGEN ÜBERWACHUNGSVORRICHTUNG
DISPOSITIF DE SURVEILLANCE D'ALIMENTATION DE GRANULÉS, DISPOSITIF D'ALIMENTATION DE CES GRANULÉS ET PROCÉDÉ D'INSTALLATION DE CE DISPOSITIF DE SURVEILLANCE

(30) Priority: 27.01.2014 SE 1450075
(43) Date of publication of application: 07.12.2016
(73) Proprietor: Väderstad Holding AB, 590 21 Väderstad (SE)
(72) Inventor: STARK, Crister, S-590 21 Väderstad (SE)
(74) Representative: AWA Sweden AB
(86) International application number: PCT/SE2015/050074
(87) International publication number: WO 2015/112086

(56) References cited:
- EP-A2- 0 175 530
- GB-A- 2 212 609
- US-A- 5 969 340
- US-A1- 2011 226 939

## Description

### Technical Field

The present document relates to a monitoring device for monitoring feeding of granules, such as seed, fertilizer or pesticide, a feeding device for such granules and a method of installation of such a monitoring device.

### Background

It is known to monitor or measure a flow of seed in a seed drill using a sowing monitoring device, in order for an operator to be alerted to any interruptions in the feeding of seed or deviations from the desired feed rate.

Such a sowing monitoring device may be achieved using a combination of a light source and a light sensor, which are arranged on each side of a seed line so that a light beam from the light source to the light sensor is broken when seed passes inside the seed line. If the light beam is not broken for the duration of a predetermined time period, this may indicate a stop in the feeding of seed, wherein an alarm signal may be generated to the operator.

Alternatively, an acoustic sowing monitoring device may be achieved by having seed fall against a sensing sheet metal part which generates an acoustic signal, based on which an electrical signal may be provided, which indicates the presence, and possibly also the quantity, of seed fed through.

A sowing monitoring device may be designed as a relatively short and at least partly transparent pipe, of which the inlet and outlet are each, connected to the duct in which the seed flow is to be monitored or measured. Light sources and light sensors are fitted on the pipe, or in openings of the walls of the pipe, so that light may pass through the flow area of the pipe.

A pneumatic seed drill is normally equipped with a distributor head, in which a seed flow is distributed into a number of smaller flows, which each lead to a respective furrow opener. In this type of seed drill, a sowing monitoring device may be fitted on each seed hose downstream of the distributor head. In connection with this, cables are also fitted between each sowing monitoring device and so-called "collecting boxes", in which the signals from a plurality of sowing monitoring devices are collected to be sent to a central control unit. The control unit may comprise one or more processing units, which compile, analyse and present the information from the sowing monitoring devices and produce alarm signals to the operator.

A pneumatic seed drill may comprise about 20 to 80 furrow openers. It will be appreciated that if the seed flow to each furrow opener is to be monitored, an equivalent number of sowing monitoring devices complete with cable harness is required. This contributes to an increased complexity in the manufacturing and maintenance of such a seed drill.

Sowing monitoring devices are not found on all seed drills. Some users choose to buy a seed drill without a sowing monitoring device.

EP0175530A2 and US5969340A show examples of sowing monitoring devices.

Consequently, there is a need to provide a sowing monitoring device which is easier to fit during manufacturing of a seed drill. In addition, there is a need to provide a sowing monitoring device which may be retrofitted in the event that a need for sowing monitoring arises.

### Summary

An object is to provide an improved or alternative monitoring device for feeding of granules. Specific objects include providing a monitoring device which is simple to fit and which is suitable for retrofitting.

According to a first aspect, a device for monitoring the feeding of granules is provided. The device comprises a duct, which defines a granule flow path, and a sensor. The sensor comprises at least one radiation source and at least one radiation sensor, arranged to receive radiation from the radiation source. The radiation source and radiation sensor are adapted to be arranged so that incident radiation from the radiation source to the radiation sensor can be acted upon by the granules. The device also comprises a sensor body, in which said radiation source and/or radiation sensor is arranged. The sensor body is insertable through at least one opening in a wall defining the duct, by a distance substantially corresponding to a width of the duct, viewed in a direction of insertion.

The sensor body may thus consist of a part which is insertable through the opening in one movement, and of which the length substantially correspond to the width of the duct. Alternatively, the sensor body may comprise two or more parts, which, viewed in the direction of insertion, are inserted together by a distance corresponding to the width of the duct. For example, the sensor body may comprise two parts, which are inserted from opposite sides of the duct so that they together are inserted by a distance substantially corresponding to the width of the duct.

"Radiation source" and "radiation sensor" respectively relate to sources of electromagnetic radiation, such as light (infrared, visible or ultraviolet), microwaves or similar, and also sound (for example ultrasound).

By inserting the sensor body through an opening in the wall of the duct, it is easy to fit or remove a radiation source and radiation sensor. In addition, it is possible to achieve a "dummy sensor body", which covers the opening without containing a sensor.

The sensor body may comprise a sensor body that is elongated in the direction of insertion, wherein at least two radiation sources and/or radiation sensors are arranged adjacent each other in the sensor body, viewed in the direction of insertion.

The sensor body may be insertable in the opening in a direction crossing the granule flow path. The concept "crossing the granule flow path" comprises crossing at right angles as well as crossing at angles of less than 90º. For example, the direction of insertion may have an angle of 30º-90º, preferably 45º-90º, 60º-90º or 80º-90º.

The opening may be positioned so that the sensor body, in the inserted position, extends along at least part of a periphery of the duct.

For example, the sensor body may extend along a duct wall in such a way that the impact on the passage of granules in the duct is minimal.

The sensor body may, in the inserted position, engage with a notch or slot in the wall which extends in the direction of insertion.

The sensor body does comprise first and second portions, which are designed to be arranged on substantially opposite sides of the granule flow path.

The sensor body first and second portions are connected to each other.

The sensor body first and second portions are connected to each other, preferably formed in one piece.

The sensor body first and second portions are elongated and have a respective proximal portion, connected to each other by a link portion, and a respective distal portion, forming free ends.

Thus, the first and second portions may be situated in substantially the same plane and extend substantially in parallel.

The radiation source may be arranged in the sensor body first portion, and the radiation sensor may be arranged in the sensor body second portion.

At least two radiation sources may be arranged in the sensor body first portion and/or at least two radiation sensors may be arranged in the sensor body second portion.

A radiation source and a radiation sensor interacting with the latter may be arranged in one of the first or second portions of the sensor body, wherein a reflector may be arranged in the other of the first and second portions of the sensor body.

The radiation source and/or the radiation sensor may be substantially enclosed in the sensor body.

The sensor body may be at least partly made from a material which is sufficiently transparent for the radiation to be transmittable from the radiation source to the radiation sensor through the material.

According to a second aspect, a feeding device for feeding of granules in an agricultural implement is provided. The feeding device comprises a distributor, having a first duct for an incoming granule flow and at least two other ducts for a respective outgoing granule flow. Each of the outgoing ducts comprises a monitoring device according to any one of the aforementioned aspects.

The feeding device may be a component part of a seed drill, fertilizer spreader or pesticide spreader.

The feeding device may comprise a sensor holder, to which the sensors are attachable.

By attaching the sensors to a sensor holder, a plurality of sensors may be fitted in one and the same assembly procedure.

The sensor holder may be equipped with connectors for electrical contacting of the sensors and electrical conductors for connecting the sensors to a control unit.

The sensors can be fitted very close to each other and even abut against each other on the sensor holder. This may be made possible by the sensors replacing a side wall portion of the duct wall.

Thus, the amount of cables can be reduced, which further facilitates the installation.

The sensor bodies of the sensors may be simultaneously insertable in a respective opening.

The sensor bodies may be insertable in a respective opening so that the sensor bodies are positioned on respective sides of a flow area defined by the duct, wherein the openings are slots formed on opposite sides of the duct and extending at a right angle to a direction of flow.
The slots may be through-holes and elongated.

The slots may have a length, viewed in a plane at a right angle to the direction of flow, corresponding to an active portion of a respective sensor body.

"Active portion" refers to the part of the sensor body which has radiation sources and/or radiation sensors.

By means of this design, the whole active part of the respective sensor body can be exposed inwards in the flow area while at the same time part of the sensor body may be left outside of the flow area, providing minimal influence on the flow area.

The effect on the duct walls can thus be minimised, which means that there is no need to compensate by, for example, increasing the material thickness and/or adding reinforcement portions.

According to a third aspect, a method of installation of a monitoring device for monitoring the feeding of granules in an agricultural implement is provided. The method comprises fitting at least two sensors on a sensor holder, and simultaneously inserting sensor bodies of the sensors into respective openings in the walls of two ducts which define respective granule flow paths.

### Brief description of the drawings

Fig 1 shows a perspective view of a seed drill 1.
Fig 2 shows a side view of a part of the seed drill 1.
Fig 3 shows a sensor 100.
Fig 4 shows an alternative sensor 200.
Fig 5a shows a further alternative sensor 300.
Fig 5b shows a further alternative sensor 400.
Fig 6 shows a further alternative sensor 500.
Fig 7 shows a plurality of sensors 500 which are fitted on a sensor holder 550.
Fig 8 shows installation of sensors 500 in a distributor head.
Fig 9 shows a detail view of sensors 500 installed in the distributor head.
Fig 10 shows a further detail view of the installed seed counter sensors 500.
Fig 11 shows a further detail view of the installed seed counter sensors 500.

### Detailed description

A concept for monitoring feeding of granules in an agricultural implement will be described below with reference to a seed drill. It will be appreciated that the concept is also applicable to devices for feeding of other types of granules than seeds, for example fertilizer and/or pesticides.

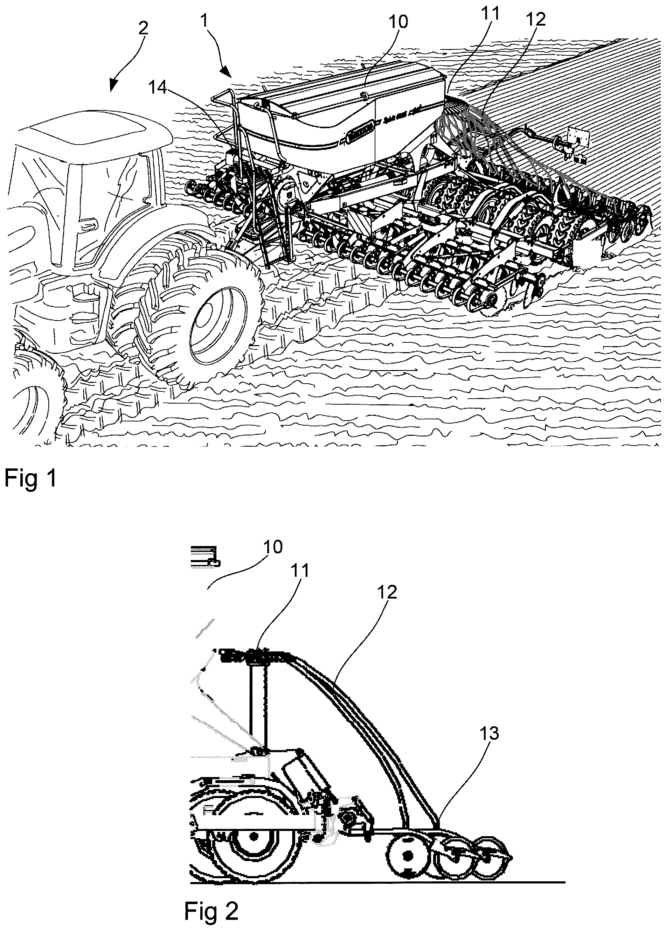

Fig 1 shows a seed drill 1, which is drawn by a tractor vehicle 2. The seed drill has a seed box 10, from which seed is fed pneumatically to a distributor head 11 and from there via hoses 12 to a respective furrow opener 13. A fan 14 generates an air flow, which carries the seed from a metering and applicator device at a lower portion of the seed box 10 to the distributor head in the form of a seed-mixed air flow. The seed-mixed air flow is distributed in the distributor head to a plurality of hoses 12.

Fig 2 shows a detail of the seed drill 1 viewed in section along a line parallel to a direction of travel. The distributor head 11 comprises in principle an area with an inlet and a plurality of outlets, each of which has a smaller flow area than the inlet.

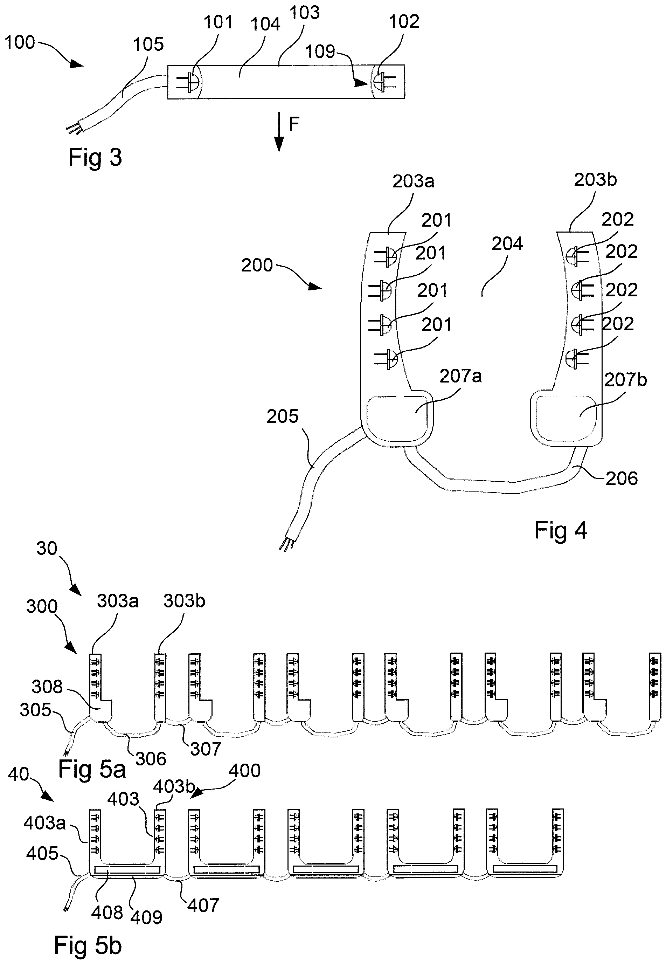

Fig 3 shows a first embodiment of a sensor 100, which comprises a radiation source 101 and a radiation sensor 102, which are integrated in a sensor body 103, so that there is a flow area 104 between the radiation source 101 and the radiation sensor 102, in which a seed flow F may flow in a direction substantially across a radiation path from the radiation source 101 to the radiation sensor 102. The sensor body 103 may be designed to at least partly surround the seed flow. For example, the sensor body 103 may be substantially U-shaped or annular, with the radiation source 101 and the radiation sensor 102 positioned so that at least part of the seed flow F can pass between them. The sensor 100 can be connected to a control unit by means of providing a signal line 105, via which the radiation source 101 and radiation sensor 102 may be supplied with power, and an outgoing sensor signal can be provided.

The sensor body shown in Fig 3 has a surface 109 which is directed towards the flow area 104 and which is convex, viewed in a plane comprising the direction of flow F.

Fig 4 shows an alternative embodiment of a sensor 200, which comprises a plurality of radiation sources 201 and radiation sensors 202, which are arranged on opposite sides of a flow area 204. In this embodiment, the radiation sources 201 are positioned in a first sensor body 203a and the radiation sensors are positioned in a second sensor body 203b. The sensor bodies 203a, 203b are connected to each other via a first signal line 206. In order to connect the sensor 200 to a control unit, a second signal line 205 can be provided, via which the radiation sources 201 and the radiation sensors 202 may be supplied with power, and one or more outgoing sensor signals can be provided.

One or both of the sensor bodies 203a, 203b may comprise an area 207a, 207b for an electric circuit, via which drive signals to the radiation sources 201 can be provided and via which sensor signals from the radiation sensors may be retrieved to be relayed to the control unit.

The sensor bodies shown in Fig 4 have a surface 209 which is directed towards the flow area 204 and which is concave, viewed in a plane at a right angle to the direction of flow F.

It will be appreciated that the surface 209 may also be convex viewed in a plane comprising the direction of flow F, according to the illustration in Fig 3.

Fig 5a shows a further sensor set 30, comprising a plurality of sensors 300 connected together. Each one of the sensors 300 comprises first and second sensor bodies 303a, 303b, which are connected by a signal line 306. In addition, the sensors 300 are connected to each other via a respective signal line 307. Each one of the sensors 300 may comprise an area for an electric circuit arranged in one of the sensor bodies 303a. The sensor set 30 is connectable to a control unit via a signal line 305.

Each sensor in a sensor set 30 according to Fig 5, may be set up to function as described with reference to Fig 3 and Fig 4, wherein the electric circuit associated with a respective sensor controls respective radiation sources and radiation sensors.

The sensor set 30 may function in different ways, depending on the complexity of the system.

Each electric circuit of a sensor can be supplied with functionality to assess whether seed is passing or not. Consequently, output data from a respective sensor may in principle consist of a value which indicates flow or no flow. Alternatively, a value which indicates an intensity of the flow can be provided, for example corresponding to the proportion of the measuring time that seed is passing and not passing respectively. It is also possible to let the value represent the number of sensors registering seed at each time point. The sensor may also be used as, or be a part of, a seed counter, i.e. a device which counts the amount of seed fed through per time unit.

The signal lines 305, 306 may thus be designed as bus lines, on which each sensor transmits its generated signals and where incoming signals to a sensor are received and forwarded. The signals can be transmitted with a label which indicates the sensor of origin.

More specifically, the signal line 206, 306 connecting two parts of the same sensor 300 may have one or more conductors which make up the bus line and one or more conductors which make up the sensor own line for communication between the sensor bodies 203a, 203b; 303a, 303b.

Fig 5b shows a variant of the concept according to Fig 5a, comprising a sensor set 40, where each sensor 400 comprises a sensor body 403 comprising first and second sensor body portions 403a, 403b and a link portion 409, which in the shown embodiment may comprise an area 408 for an electric circuit. The sensor body 403 is thus formed in one piece. The sensor bodies 403 may be connected by signal lines 407, and a signal line 405 is connectable to a control unit.

Here the sensor body 403 may substantially have the form of a U, viewed in a plane at a right angle to the direction of flow F.

The function of the concept according to Fig 5b may be substantially the same as the one according to Fig 5a.

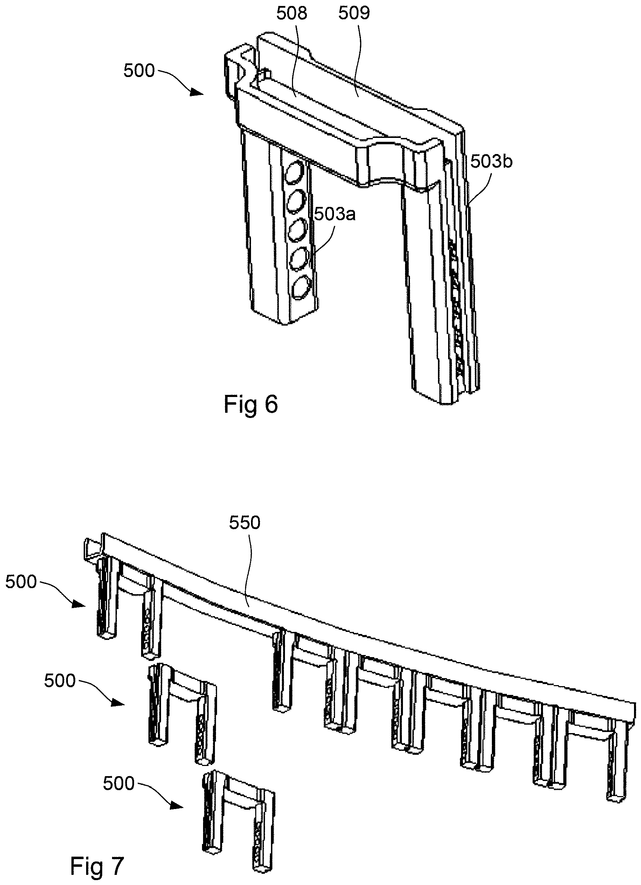

Fig 6 shows a further variant of a sensor 500, comprising first and second sensor body portions 503a, 503b, which each include a plurality of radiation sources and radiation sensors respectively, arranged as shown with reference to Figs 3-5. A link portion 509 connects the sensor body portions 503a, 503b and creates an area 508 for e.g. an electric circuit with connectors, according to the description below.

Here the link portion 509 forms a substantially elongated part, from the ends of which proximal parts of the sensor body portions 503a, 503b extend substantially at a right angle and in substantially the same plane. Distal parts of the sensor body portions 503a, 503b form free ends.

In a non-claimed alternative, the free ends may be connected with each other via a material portion (not shown), providing the sensor body with a general rectangular shape or an annular shape. Such an embodiment may increase the sensor body strength but requires a larger sensor opening, which may affect the strength of the part in which the sensor body is to be fitted.

Fig 7 shows a sensor holder 550, which carries a plurality of sensors 500. The sensor holder 550 may be a strip whose shape and extension are adapted to the distributor head in which the sensors are to be fitted. The sensor holder 550 may comprise connectors for electrical contacting of the sensors 500 and lines for establishing a communication bus for communication between sensors and/or between sensors and a control unit.

The sensors 500 may be attachable to the sensor holder 550 using fasteners, e.g. screws, snap-on fittings, clamp fittings or any other type of clamp.

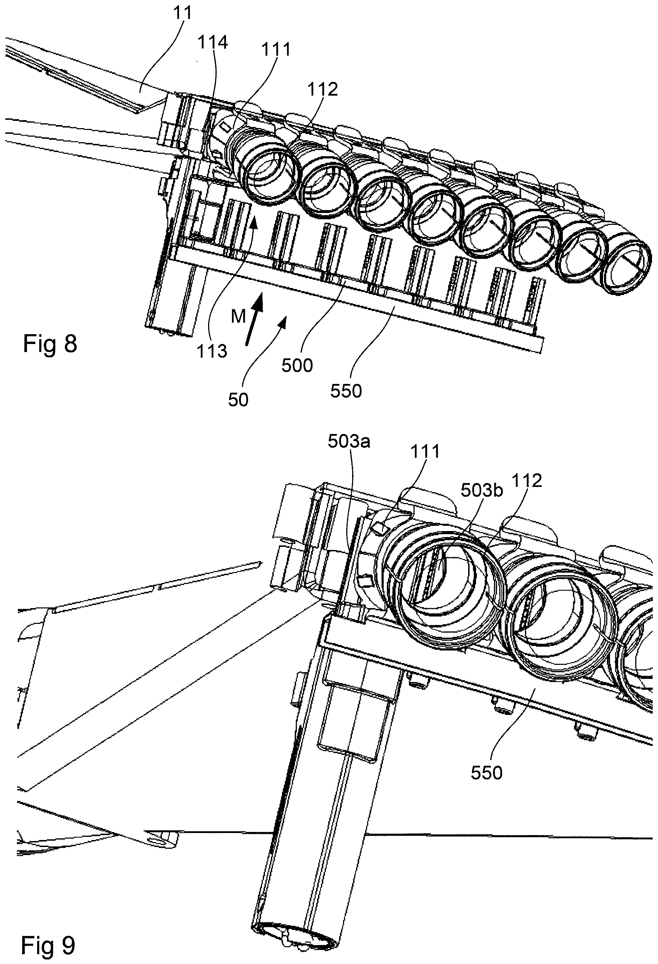

Fig 8 shows a part of a distributor head 11 equipped with a plurality of adapter sleeves 111, one end (not shown) of which connects to a distributor area (not shown) and to the other end 112 of which a respective hose 12 is connectable. Fig 8 shows how a sensor set 50 comprising a plurality of sensors and a sensor holder 550 are about to be inserted in a direction of installation M to an installation position. The sensor openings 113, comprise slots which are through-holes 114 on respective sides of the flow area, viewed in a horizontal direction. The slots 114 are designed in such a way that, when the sensor body portions 503a, 503b are inserted into the slots, each sensor body has an active portion which is exposed inwards in the flow area and an outer portion which is exposed outwards. The link portion 509 may be positioned completely outside the flow area, and its insertion into the flow area may be prevented by the adapter sleeve wall.

Fig 9 shows a part of the distributor head 11, when the sensor set 50 has been fully moved to the installation position, so that the sensor body portions 503a, 503b are inside the adapter sleeve 111 and thus able to register seed passing through the adapter sleeve 111 towards the hose 12.

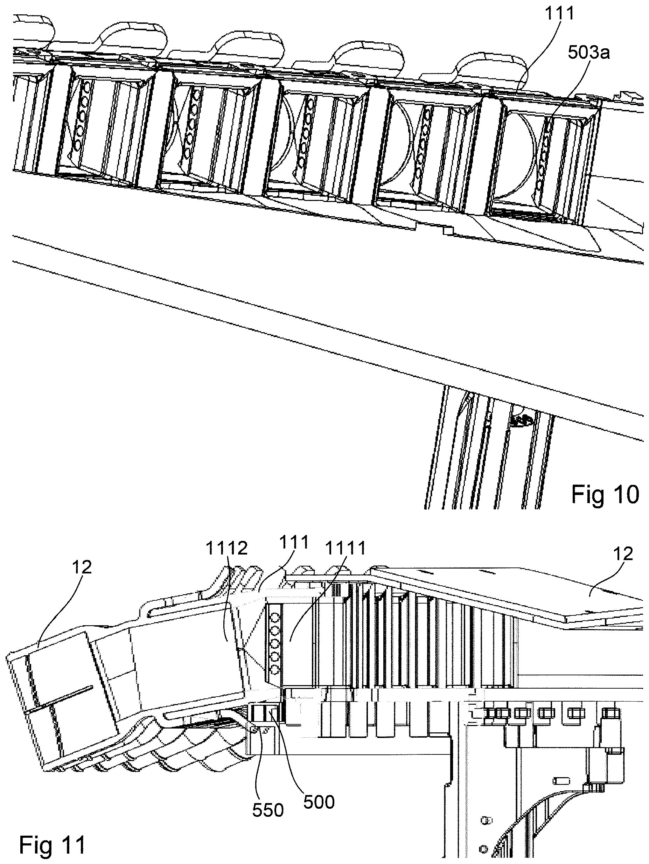

Fig 10 shows the distributor head 11 viewed from the inside. It will be appreciated that the adapter sleeve, viewed from the inside, has a substantially square cross-section, which facilitates the design of the distributor area. As shown in Fig 9, the adapter sleeve 111 has a circular cross-section instead, which coincides with the cross-section of the hose 12. The adapter sleeve thus provides a transition between a first cross-section adapted for connection to the distributor area and a second cross-section adapted for the hoses 12.

Each of the adapter sleeves 111 has a sensor opening 113, through which a sensor is insertable in a direction substantially at a right angle to the direction of flow F.

The adapter sleeves 111 may have grooves which extend in the direction of insertion M and with which the sensor bodies 503a, 503b may engage.

With reference to Fig 11, the adapter sleeves 111 may be designed as a substantially pipe-shaped unit, the first end of which is adapted to be connected to an outlet from the distributor head, and the other end of which is adapted to receive a hose for connection to a furrow opener.

Each adapter sleeve may thus have a sensor portion 1111 whose cross-section is adapted for receiving a sensor, and an outlet portion 1112 whose cross-section is adapted for receiving the hose 12.

In the example shown, the sensor portion has a substantially rectangular (square) cross-section and the outlet portion a substantially circular cross-section.

The sensor portion 1111 has an opening (downwards in Fig 11) in the form of a slot in the lower wall and respective slots in connecting vertical walls.

When the sensor is inserted into the opening (upwards in Fig 11), the sensor body portions 503a, 503b will engage with the slots in the vertical walls and the link portion 509 will close the opening downwards.

Thus it could be said that the sensor body closes the side openings of the adapter sleeve. Together, the adapter sleeve 111 and the sensor body thus form a duct which is sufficiently leaktight to transport a granular mixed air flow.

In the event the machine should be sold or used without seed monitoring device, i.e. without sensors, it is possible to provide "dummy sensors", i.e. a device which can be inserted into the sensor openings in the same way as the sensors, but without the sensor functionality, in order to seal the sensor openings. If sowing monitoring is to be retrofitted, the dummy sensors can be removed and genuine sensors, as described above, can be fitted.

In the embodiments shown above, the radiation source 101, 201 may be a source of electromagnetic radiation, such as light (visible light, IR light or UV light), or of arbitrary radiation, such as microwave radiation or similar. Alternatively, the radiation source may be designed to provide sound, such as ultrasound or similar.

The radiation sensor 102, 202 may be in the form of a sensor adapted to the radiation source, such as a light sensor, microwave sensor or sound sensor.

The sensor body 103, 203a, 203b may be made from a material which at least in part is sufficiently transparent for the radiation generated by the radiation sources 101, 201 to be able to reach the radiation sensors 102, 202. If the sensor body is formed from polymer material ("plastic"), the whole sensor body, for example, may be formed from a sufficiently transparent plastic. Alternatively, the sensor body may be equipped with openings or transparent windows at the radiation sources and/or the radiation sensors. Such windows may be formed from the same material as the rest of the sensor body, or from another material. Such windows may have a higher surface smoothness than surrounding parts of the sensor body.

## Claims

1. A device for monitoring feeding of granules, comprising:
a duct (12, 111) defining a granule flow path; and
a sensor (100, 200, 300, 400, 500) comprising:
at least one radiation source (101, 201, 301, 401, 501),
at least one radiation sensor (102, 202, 302, 402, 502), arranged to receive radiation from the radiation source,
the radiation source and radiation sensor being adapted to be arranged so that incident radiation from the radiation source to the radiation sensor can be acted upon by the granules, and
a sensor body (103, 203a, 203b, 303a, 303b, 403a, 403b, 503a, 503b), in which said radiation source and/or radiation sensor are arranged,
wherein the sensor body comprises first (203a, 303a, 403a, 503a) and second (203b, 303b, 403b, 503b) portions, which are designed to be arranged on substantially opposite sides of the granule flow path,
wherein the sensor body first (203a, 303a, 403a, 503a) and second (203b, 303b, 403b, 503b) portions are connected to each other, preferably formed in one piece, and
wherein the sensor body first (203a, 303a, 403a, 503a) and second (203b, 303b, 403b, 503b) portions are elongated and have a respective proximal portion, connected to each other by a link portion (409, 509), and a respective distal portion, forming free ends,
**characterized in that**
the sensor body is insertable through at least one opening in a wall defining the duct, by a distance corresponding substantially to a width of the duct, viewed in a direction of insertion.

2. The device according to claim 1, wherein at least two radiation sources and/or radiation sensors are arranged adjacent each other in the sensor body, viewed in the direction of insertion.

3. The device according to claim 2, wherein the sensor body is insertable in the opening in a direction crossing the granule flow path.

4. The device according to any one of the preceding claims, wherein the opening is positioned so that the sensor body, in the inserted position, extends along at least part of a periphery of the duct.

5. The device according to any one of the preceding claims, wherein the sensor body, in the inserted position, engages with a notch or slot in the wall which extends in the direction of insertion.

6. The device according to any one of claims 1-5, wherein the radiation source is arranged in the sensor body first portion (203a, 303a, 403a, 503a), and the radiation sensor is arranged in the sensor body second portion (203b, 303b, 403b, 503b).

7. The device according to any one of claims 1-6, wherein at least two radiation sources are arranged in the sensor body first portion (203a, 303a, 403a, 503a) and/or wherein at least two radiation sensors are arranged in the sensor body second portion (203b, 303b, 403b, 503b).

8. The device according to any one of claims 1-5, wherein a radiation source and a radiation sensor interacting with the latter are arranged in one of the sensor body first (203a, 303a, 403a, 503a) and second (203b, 303b, 403b, 503b) portions, wherein a reflector is arranged in the other of the sensor body first and second portions.

9. The device according to any one of the preceding claims, wherein the radiation source and/or the radiation sensor is substantially enclosed in the sensor body.

10. The device according to any one of the preceding claims, wherein the sensor body is at least partly made from a material which is sufficiently transparent for the radiation to be transmittable from the radiation source to the radiation sensor through the material.

11. A feeding device for feeding of granules in an agricultural implement, comprising:
a distributor (11), having a first duct for an incoming granule flow and at least two other ducts for a respective outgoing granule flow,
each of the outgoing ducts comprising a monitoring device according to any one of the preceding claims.

12. The feeding device according to claim 11, further comprising a sensor holder (550), to which the sensors (500) are attachable.

13. The feeding device according to claim 12, wherein the sensor holder has connectors for electrical contacting of the sensors and electrical conductors for connecting the sensors (500) to a control unit.

14. The feeding device according to claim 12 or 13, wherein the sensor bodies of the sensors (500) are simultaneously insertable in a respective opening.

15. The feeding device according to either of claims 11-14, wherein each sensor body is insertable in a respective opening so that the sensor bodies are positioned on respective sides of a flow area defined by the duct, wherein the openings are elongated slots formed on opposite sides of the duct and extending in a direction at a right angle to a direction of flow.

16. The feeding device according to claim 15, wherein the slots have a length, viewed in a plane at a right angle to the direction of flow, corresponding to an active portion of a respective sensor body, i.e. the part of the sensor body which has radiation sources and/or radiation sensors.

17. A method for installation of a monitoring device for monitoring feeding of granules in an agricultural implement, according to any of claims 1-10, comprising:
fitting at least two sensors (500) to a sensor holder (550), and
simultaneously inserting sensor bodies of the sensors (500) in respective openings (113) in the walls of two ducts defining respective granule flow paths.

## Patentansprüche

1. Vorrichtung zum Überwachen eines Zuführens von Granulaten, umfassend:
eine Leitung (12, 111), die einen Granulat-Strömungsweg definiert, und
einen Sensor (100, 200, 300, 400, 500), umfassend:
mindestens eine Strahlungsquelle (101, 201, 301, 401, 501),
mindestens einen Strahlungssensor (102, 202, 302 402, 502), der angeordnet ist, um Strahlung von der Strahlungsquelle zu empfangen, wobei die Strahlungsquelle und der Strahlungssensor ausgelegt sind, um derart angeordnet zu sein, dass einfallende Strahlung von der Strahlungsquelle zu dem Strahlungssensor durch die Granulate beaufschlagt werden kann, und
einen Sensorkörper (103, 203a, 203b, 303a, 303b, 403a, 403b, 503a, 503b), in dem die Strahlungsquelle und/oder der Strahlungssensor angeordnet sind,
wobei der Sensorkörper einen ersten (203a, 303a, 403a, 503a) und einen zweiten (203b, 303b, 403b, 503b) Abschnitt umfasst, die konzipiert sind, um auf im Wesentlichen gegenüberliegenden Seiten des Granulat-Strömungswegs angeordnet zu sein,
wobei der erste (203a, 303a, 403a, 503a) und der zweite (203b, 303b, 403b, 503b) Abschnitt des Sensorkörpers miteinander verbunden, vorzugsweise in einem Stück gebildet sind und
wobei der erste (203a, 303a, 403a, 503a) und der zweite (203b, 303b, 403b, 503b) Abschnitt des Sensorkörpers länglich sind und einen jeweiligen proximalen Abschnitt haben, die durch einen Verbindungsabschnitt (409, 509) miteinander verbunden sind, und
einen jeweiligen distalen Abschnitt haben, die freie Enden bilden,
**dadurch gekennzeichnet, dass**
der Sensorkörper durch mindestens eine Öffnung in einer Wand einsetzbar ist, die eine Leitung definiert, um einen Abstand, der im Wesentlichen einer Breite der Leitung entspricht, wenn er in eine Einsetzrichtung betrachtet wird.

2. Vorrichtung nach Anspruch 1, wobei mindestens zwei Strahlungsquellen und/oder Strahlungssensoren benachbart zueinander in dem Sensorkörper angeordnet sind, wenn er in die Einsetzrichtung betrachtet wird.

3. Vorrichtung nach Anspruch 2, wobei der Sensorkörper in die Öffnung in eine Richtung einsetzbar ist, die den Granulat-Strömungsweg kreuzt.

4. Vorrichtung nach einem der vorhergehenden Ansprüche, wobei die Öffnung derart positioniert ist, dass sich der Sensorkörper in der eingesetzten Position entlang mindestens eines Teils eines Umfangs der Leitung erstreckt.

5. Vorrichtung nach einem der vorhergehenden Ansprüche, wobei der Sensorkörper in der eingesetzten Position mit einer Kerbe oder einem Schlitz in der Wand in Eingriff steht, die/der sich in die Einsetzrichtung erstreckt.

6. Vorrichtung nach einem der Ansprüche 1-5, wobei die Strahlungsquelle in dem ersten Abschnitt (203a, 303a, 403a, 503a) des Sensorkörpers angeordnet ist und der Strahlungssensor in dem zweiten Abschnitt (203b, 303b, 403b, 503b) des Sensorkörpers angeordnet ist.

7. Vorrichtung nach einem der Ansprüche 1-6, wobei mindestens zwei Strahlungsquellen in dem ersten Abschnitt (203a, 303a, 403a, 503a) des Sensorkörpers angeordnet sind und/oder wobei mindestens zwei Strahlungssensoren in dem zweiten Abschnitt (203b, 303b, 403b, 503b) des Sensorkörpers angeordnet sind.

8. Vorrichtung nach einem der Ansprüche 1-5, wobei eine Strahlungsquelle und ein Strahlungssensor, der mit Letzterer in Wechselwirkung tritt, in einem des ersten (203a, 303a, 403a, 503a) und des zweiten (203b, 303b, 403b, 503b) Abschnitts des Sensorkörpers angeordnet sind, wobei ein Reflektor in dem anderen des ersten und des zweiten Abschnitts des Sensorkörpers angeordnet ist.

9. Vorrichtung nach einem der vorhergehenden Ansprüche, wobei die Strahlungsquelle und/oder der Strahlungssensor im Wesentlichen in dem Sensorkörper eingeschlossen ist.

10. Vorrichtung nach einem der vorhergehenden Ansprüche, wobei der Sensorkörper zumindest teilweise aus einem Material hergestellt ist, das ausreichend transparent ist, damit die Strahlung von der Strahlungsquelle zu dem Strahlungssensor durch das Material übertragbar ist.

11. Zuführvorrichtung zum Zuführen von Granulaten in einem landwirtschaftlichen Gerät, umfassend:
einen Verteiler (11), der eine erste Leitung für einen eingehenden Granulatstrom und mindestens zwei andere Leitungen für einen jeweiligen ausgehenden Granulatstrom hat,
wobei jede der ausgehenden Leitungen eine Überwachungsvorrichtung nach einem der vorhergehenden Ansprüche umfasst.

12. Zuführvorrichtung nach Anspruch 11, ferner umfassend einen Sensorhalter (550), an den die Sensoren (500) anbringbar sind.

13. Zuführvorrichtung nach Anspruch 12, wobei der Sensorhalter Verbinder zum elektrischen Verbinden der Sensoren und elektrische Leiter zum Verbinden der Sensoren (500) mit einer Steuereinheit hat.

14. Zuführvorrichtung nach Anspruch 12 oder 13, wobei die Sensorkörper der Sensoren (500) gleichzeitig in eine jeweilige Öffnung einsetzbar sind.

15. Zuführvorrichtung nach einem der Ansprüche 11-14, wobei jeder Sensorkörper in eine jeweilige Öffnung derart einsetzbar ist, dass die Sensorkörper auf jeweiligen Seiten eines Strömungsbereichs positioniert sind, der durch die Leitung definiert ist, wobei die Öffnungen längliche Schlitze sind, die auf gegenüberliegenden Seiten der Leitung gebildet sind und sich in eine Richtung in einem rechten Winkel zu einer Strömungsrichtung erstrecken.

16. Zuführvorrichtung nach Anspruch 15, wobei die Schlitze eine Länge haben, die, wenn sie in einer Ebene in einem rechten Winkel zu der Strömungsrichtung betrachtet werden, einem aktiven Abschnitt eines jeweiligen Sensorkörpers entsprechen, d.h. dem Teil des Sensorkörpers, der Strahlungsquellen und/oder Strahlungssensoren hat.

17. Verfahren zum Installieren einer Überwachungsvorrichtung zum Überwachen eines Zuführens von Granulaten in einem landwirtschaftlichen Gerät nach einem der Ansprüche 1-10, umfassend:
Anbringen von mindestens zwei Sensoren (500) an einem Sensorhalter (550) und
gleichzeitig Einsetzen von Sensorkörpern der Sensoren (500) in jeweilige Öffnungen (113) in den Wänden von zwei Leitungen, die jeweilige Granulat-Strömungswege definieren.

## Revendications

1. Dispositif de surveillance d'alimentation en granulés, comprenant :
une conduite (12,111) définissant un passage d'écoulement de granulés ; et
un capteur (100,200,300,400,500) comprenant :
au moins une source de radiations (101,201, 301,401,501),
au moins un capteur de radiations (102,202,302,402,502) conçu pour recevoir des radiations en provenance de la source de radiations,
la source de radiations et le capteur de radiations étant aptes à être disposés de manière à ce que les granulés puissent agir sur une radiation incidente en provenance de la source de radiations vers le capteur de radiations, et
un corps de capteur (103, 203a, 203b, 303a, 303b, 403a, 403b, 503a, 503b) dans lequel lesdits source de radiations et/ou capteur de radiations sont disposés,
le corps de capteur comprenant des première (203a, 303a, 403a, 503a) et seconde (203b, 303b, 403b, 503b) sections qui sont conçues pour être disposées sur des faces substantiellement opposées du passage d'écoulement de granulés,
les première (203a, 303a, 403a, 503a) et seconde (203b, 303b, 403b, 503b) sections du corps de capteur étant connectées les unes aux autres, de préférence en formant bloc, et
les première (203a, 303a, 403a, 503a) et seconde (203b, 303b, 403b, 503b) sections du corps de capteur étant allongées et comportant une section proximale respective connectée aux autres par une section de liaison (409,509) et une section distale respective formant les extrémités libres, **caractérisé en ce que**
le corps de capteur est insérable à travers un orifice dans une paroi définissant la conduite à raison d'une distance correspondant substantiellement à une largeur de la conduite vue dans un sens d'insertion.

2. Dispositif selon la revendication 1, dans lequel au moins deux sources de radiation et/ou capteurs de radiation sont disposés adjacents l'un à l'autre dans le corps de capteur, vus dans le sens d'insertion.

3. Dispositif selon la revendication 2, dans lequel le corps de capteur est insérable dans l'orifice dans un sens croisant le passage d'écoulement de granulés.

4. Dispositif selon l'une quelconque des revendications précédentes, dans lequel l'orifice est positionné de manière à ce que le corps de capteur, dans la position insérée, s'étende le long d'au moins une partie d'une périphérie de la conduite.

5. Dispositif selon l'une quelconque des revendications précédentes, dans lequel le corps de capteur, dans la position insérée, s'engage dans une encoche ou une fente pratiquée dans la paroi qui s'étend dans le sens d'insertion.

6. Dispositif selon l'une quelconque des revendications 1 à 5, dans lequel la source de radiations est disposée dans la première section (203a, 303a, 403a, 503b) du corps de capteur et le capteur de radiations est disposé dans la seconde section (203b, 303b, 403b, 503b) du corps de capteur.

7. Dispositif selon l'une quelconque des revendications 1 à 6, dans lequel au moins deux sources de radiation sont disposées dans la première section (203a, 303a, 403a, 503b) du corps de capteur et/ou au moins deux capteurs de radiations sont disposés dans la seconde section (203b, 303b, 403b, 503b) du corps de capteur.

8. Dispositif selon l'une quelconque des revendications 1 à 5, dans lequel une source de radiations et un capteur de radiations interagissant avec cette dernière sont disposés dans une parmi la première section (203a, 303a, 403a, 503b) du corps de capteur et la seconde section (203b, 303b, 403b, 503b) du corps de capteur, un réflecteur étant disposé dans l'autre des première et seconde sections de corps de capteur.

9. Dispositif selon l'une quelconque des revendications précédentes, dans lequel la source de radiations et/ou le capteur de radiations sont substantiellement renfermés dans le corps de capteur.

10. Dispositif selon l'une quelconque des revendications précédentes, dans lequel le corps de capteur est au moins partiellement composé d'un matériau qui est suffisamment transparent pour que la radiation soit transmissible depuis la source de radiations jusqu'au capteur de radiations par l'intermédiaire du matériau.

11. Dispositif d'alimentation pour l'alimentation en granulés d'un instrument agricole, comprenant :
un distributeur (11) doté d'une première conduite pour un flux de granulés entrant et d'au moins deux autres conduites pour un flux de granulés sortant respectif,
chacune des conduites sortantes comprenant un dispositif de contrôle selon l'une quelconque des revendications précédentes.

12. Dispositif d'alimentation selon la revendication 11, comprenant en outre un support de capteur (550) auquel les capteurs (500) peuvent être fixés.

13. Dispositif d'alimentation selon la revendication 12, dans lequel le support de capteur comporte des connecteurs pour la mise en contact électrique des capteurs et des conducteurs électriques pour connecter les capteurs (500) à une unité de commande.

14. Dispositif d'alimentation selon l'une quelconque des revendications 12 ou 13, dans lequel les corps des capteurs (500) sont insérables simultanément dans un orifice respectif.

15. Dispositif d'alimentation selon l'une quelconque des revendications 11 à 14, dans lequel chaque corps de capteur est insérable dans un orifice respectif, de sorte que les corps de capteur sont positionnés sur des côtés respectifs d'une zone d'écoulement définie par la conduite, les orifices étant des fentes allongées pratiquées sur des faces opposées de la conduite et s'étendant dans un sens orthogonal à un sens d'écoulement.

16. Dispositif d'alimentation selon la revendication 15, dans lequel les fentes ont une longueur, vue dans un plan orthogonal au sens d'écoulement, correspondant à une section active d'un corps de capteur respectif, c'est-à-dire de la partie du corps de capteur qui comporte des sources de radiation et/capteurs de radiations.

17. Procédé d'installation d'un dispositif de contrôle pour le contrôle de l'alimentation en granulés d'un instrument agricole selon l'une quelconque des revendications 1 à 10, comprenant :
l'ajustement d'au moins deux capteurs (500) sur un support de capteurs (550), et
l'insertion simultanée des corps des capteurs (500) dans des orifices respectifs (113) des parois de deux conduites définissant des passages respectifs d'écoulement de granulés.
